# FASCICULE DE BREVET EUROPEEN

(11) **EP 4 097 377 B1**
(45) Date de publication et mention de la délivrance du brevet: **19.03.2025**
(21) Numéro de dépôt: 21700594.1
(22) Date de dépôt: 19.01.2021
(51) Int. Cl.: F16H 61/02

(54) **PROCEDE DE PARAMETRAGE DE LOIS DE CHANGEMENT DE RAPPORTS**
VERFAHREN ZUR PARAMETRISIERUNG VON SCHALTGESETZEN
METHOD FOR PARAMETERIZING GEARSHIFT LAWS

(30) Priorité: 27.01.2020 FR 2000748
(43) Date de publication de la demande: 07.12.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: GUIRAUTON, Alexandre, 91600 Savigny-sur-Orge (FR)
(74) Mandataire: Renault Group
(86) Numéro de dépôt international: PCT/EP2021/050980
(87) Numéro de publication internationale: WO 2021/151713

(56) Documents cités:
- DE-A1- 102007 050 160
- FR-A1- 2 732 429
- JP-A- 2011 231 907
- JP-A- H06 193 723

## Description

La présente invention se rapporte à la commande des transmissions à rapports étagés, en particulier pour véhicules routiers.

Plus précisément, elle a pour objet un procédé de paramétrage de lois de changement de rapport sur une transmission à rapports étagés associée à un moteur de traction de véhicule, imposant à la transmission un changement de rapport lorsque son point de fonctionnement, qui est déterminé par la charge du moteur et par la vitesse de déplacement du véhicule, traverse une courbe de vitesse de changement de rapport en fonction de la charge du moteur.

Dans la plupart des transmissions automatiques à rapports étagés, les changements de rapport en mode automatique sont décidés en fonction de critères incluant la vitesse de déplacement du véhicule et la charge du moteur.

Le plus souvent, ces critères sont traduits sous forme de lois de changement de rapport, établies dans un plan de coordonnées Vv/αc, vitesse de déplacement du véhicule/charge du moteur. La charge du moteur peut être représentée par l'ouverture de l'organe de régulation du combustible dans le moteur, ou par un autre critère représentatif de la demande de puissance du conducteur, comme l'enfoncement de sa pédale d'accélération. De manière générale, les changements de rapport s'effectuent à des vitesses du véhicule d'autant plus élevées que la charge du moteur est importante. De manière constante également, le passage montant (N à N+1) s'effectue à une vitesse sensiblement supérieure que le passage correspondant inverse, de N+1 à N, pour éviter les phénomènes d'oscillation, dits de « pompage » entre ces deux rapports.

Dans les véhicules à boîte de vitesses manuelles, où les changements de rapport sont décidés et réalisés à l'initiative du conducteur, on peut aussi tirer profit de lois de passage équivalentes à celles des transmissions automatiques. Ces lois permettent alors d'indiquer au conducteur, l'intérêt ou la nécessité d'opérer un changement de rapport montant ou descendant, afin de tirer un meilleur parti de son moteur, en termes de confort, de sécurité ou de consommation. Cette indication peut s'effectuer par affichage dans l'habitacle d'un rapport de boîte préconisé, ou « *GSI* » pour « *Gear Shift Indicator* », que le conducteur reste libre d'engager ou non.

Pour assurer en permanence des changements de rapport optimaux, en dépit de la variation des conditions de roulage, les lois doivent s'adapter à certaines conditions de conduite, comme l'adoption d'un mode économique (mode ECO), la pente, la température d'eau d'un moteur thermique, etc.

Par la publication FR 2 741 931, on connaît des transmissions dites auto-adaptatives, qui peuvent appliquer plusieurs lois de changement de rapport, selon les conditions de roulage (ville, montée, descente, etc.). La commutation entre des lois préétablies présente cependant certains inconvénients, dont le risque d'être mal adaptées aux conditions rencontrées, ou de surprendre le conducteur.

Par la publication JPH06193723, il est connu d'appliquer des lois de correction à un procédé de paramétrage de lois de changement de rapport sur une transmission à rapports étagés.

Pour adapter les lois de changement de rapport, on peut aussi les reparamétrer directement en fonction des conditions de roulage rencontrées. Mais les lois sont normalement établies à partir d'un nombre élevé de points de fonctionnement individuels. Leur re-paramétrage est alors une opération complexe, difficile à réaliser instantanément de manière homogène.

La présente invention a pour but de paramétrer de façon homogène et simplifiée, des lois de changement de rapport.

Le but est résolu par un procédé de paramétrage selon la revendication 1.

Dans ce but, elle propose d'adapter linéairement des lois de base à des conditions de roulage particulières, en fonction d'un premier paramètre imposant le changement de rapport à une vitesse de déplacement du véhicule proportionnelle à celle de la loi de base, et d'un deuxième paramètre imposant à la loi adaptée un écart initial de vitesse de changement de rapport par rapport à la loi de base, aux faibles charges du moteur.

De préférence, la vitesse de changement y sur les lois adaptées, est paramétrée en fonction de la vitesse de changement sur la loi de base x et de deux paramètres a et b, en appliquant une formule du type y = ax + b.

Ce procédé peut s'appliquer aux changements de rapport montants, et aux changements de rapport descendants.

D'autres caractéristiques et avantages de la présente invention,
qui est définie par les revendications annexées, ressortiront clairement à la lecture de la description suivante d'un mode de réalisation non limitatif de celle-ci, en liaison avec les dessins annexés.
[Fig. 1] montre le procédé de l'invention, et
[Fig. 2] illustre son application à des conditions particulières.
[Fig. 3] illustre son application à des conditions particulières.
[Fig. 4] illustre un mode de réalisation ne faisant pas partie de l'invention.

Comme indiqué plus haut, les impératifs de sécurité et de confort de conduite, nécessitent que les lois de changement de rapport (tant pour l'affichage de type *GSI,* que pour le pilotage des transmissions automatiques), s'adaptent à certaines conditions de conduite, comme des modes économiques (mode ECO), la pente, la température d'eau du moteur thermique, etc.

Le procédé de paramétrage proposé concerne une transmission à rapports étagés, associée à un moteur de traction de véhicule. Il s'applique à des lois de changement de rapport qui imposent à la transmission un changement de rapport lorsque son point de fonctionnement, qui est déterminé par la charge du moteur et par la vitesse de déplacement du véhicule, traverse une courbe de changement de rapport selon la charge du moteur.

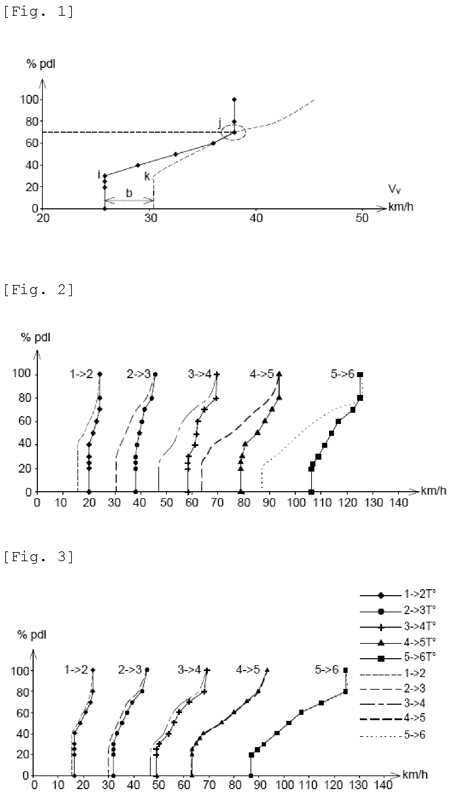

Sur la figure 1, on a représenté deux courbes, traduisant ce type de lois de changement de rapports dans un repère du type Vv/αc, avec des kilomètres heure en abscisse, et un pourcentage d'enfoncement pédale en ordonnées. En traversant les lois de gauche à droite, le changement de rapport est montant (N à N+1). La courbe A, en traits pleins, est la courbe de base Sur une première partie de l'enfoncement (environ de 0 à 30%). Jusqu'au point i, elle est verticale. La vitesse requise pour le changement est invariante. A partir de 30%, la courbe suit une pente positive. La vitesse augmentant régulièrement avec la charge, jusqu'au point j, où elle n'augmente plus jusqu'à l'enfoncement complet de la pédale.

La courbe B, en traits interrompus, démarre verticalement à une vitesse de déplacement plus élevée que la courbe A, et s'infléchit à partir du point k, pour la rejoindre au point j.

La courbe A est établie pour des premières conditions de déplacement, par exemple des conditions de déplacement courantes. La courbe B est une loi de passage dérivée de la première, qui est adaptée pour répondre à d'autres conditions d'utilisation. L'adaptation est de type linéaire. Elle introduit un écart ou « *offset* » de vitesse, qui vient s'ajouter (ou se soustraire) à la loi de base. Sur le schéma, l'offset est ajouté à la loi de base, au-dessus du pied de loi (point i).

La vitesse de changement de rapport y, sur les lois adaptées, est paramétrée en fonction de la vitesse de changement x sur la loi de base correspondante, et de deux paramètres a et b, en appliquant la formule y = ax + b. Le paramètre a, détermine le point j, auquel la loi de base et la loi adaptée se rejoignent. Le paramètre b détermine l'offset initial s'appliquant sur le pied de la loi.

La solution proposée, consiste à adapter linéairement des lois de base à des conditions de roulage particulières, en fonction du premier paramètre a, imposant le changement de rapport à une vitesse de déplacement du véhicule proportionnelle à celle de la loi de base, et du deuxième paramètre b, imposant à la loi adaptée un écart initial de vitesse de changement de rapport par rapport à la loi de base, aux faibles charges du moteur.

L'adaptation s'opère notamment sur des lois de passage standard, implémentées dans le calculateur de la transmission, qui conviennent à la plupart des conditions d'utilisation du véhicule. La méthode proposée permet d'adapter en permanence ces lois de base, à des conditions de conduite particulières.

L'adaptation des lois de passages, est obtenue en recalculant automatiquement les lois de base, sans avoir à les reparamétrer complètement. Alors que le calibrage d'une cartographie complète, nécessite habituellement de paramétrer un nombre élevé de points (au moins une soixantaine), l'invention simplifie considérablement cette opération, puisqu'il ne requiert le calibrage que des deux paramètres (a et b) par nouvelle loi, déterminant respectivement :
- la vitesse de déplacement où les lois de base et les lois adaptées se croisent dans un repère plan, et
- l'offset initial s'appliquant sur le pied de lois.

Sur une première partie de la course d'enfoncement pédale (faibles charges moteur), l'écart (ou « *offset* ») de vitesse entre la loi de base et la loi adaptée est fixe. Dans une deuxième partie (aux fortes charges), il est proportionnel à vitesse requise sur la loi de base.

La figure 2 montre un premier exemple d'adaptation linéaire d'un jeu de lois de changements de rapport montants sur une boîte à six rapports de marche avant, en fonction de la pente de la route. Les lois de base de première en seconde, de seconde en troisième, de troisième en quatrième, de quatrième en cinquième, et de cinquième en sixième, sont représentées en traits interrompus. Les lois correspondantes, adaptées linéairement à une valeur de pente plus importante, sont représentées en traits pleins. Elles sont décalées vers la droite. Dans cet exemple, les offsets initiaux b sont différents pour chacune des cinq lois du jeu. L'adaptation du jeu complet de lois, à une valeur de pente de la route, requiert le paramétrage d'un vecteur cinq dimensions, pour l'offset de pied de loi (paramètre b).

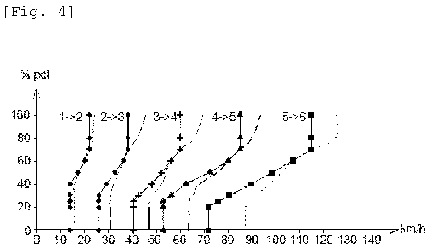

L'exemple de la figure 3, concerne l'adaptation linéaire de lois de changement de rapports montants, sur une boîte à six rapports, à une température d'eau plus froide. Les lois de base (sans adaptation) sont en traits interrompus, et les lois adaptées sont en traits pleins. Certaines lois adaptées (notamment de quatrième en cinquième et de cinquième en sixième) sont superposées aux lois de base, car elles sont identiques à celles-ci. Dans le cadre de l'invention, un paramètre supplémentaire peut en effet être introduit pour choisir d'appliquer ou non l'adaptation linéaire à chaque passage montant. On peut ainsi adapter sélectivement, seulement certaines lois de changement de rapport d'un même jeu. La figure 4 illustre un mode de réalisation ne faisant pas partie de l'invention et présente l'adaptation linéaire de lois de changement de rapports montants de base, en traits interrompus, à un mode de conduite économique (mode ECO), en traits pleins. A la différence des deux exemples précédents, l'offset initial est négatif. On remarque également que le point d'offset nul (intersection des lois de base et des lois adaptées) est atteint pour un enfoncement pédale de 75%, au-delà duquel les courbes se croisent, alors que précédemment, les courbes ne se rejoignent qu'à 100% d'enfoncement pédale.

Dans ces trois exemples, l'adaptation linéaire s'applique seulement à partir du haut du pied de loi. Le point de croisement des lois est atteint à la pleine charge du moteur dans les deux premiers, et à une charge intermédiaire du moteur dans le troisième.

L'offset initial (paramètre b) impose l'écart de vitesse fixe entre les lois, de la charge moteur nulle (pas d'enfoncement pédale) jusqu'à une charge moteur intermédiaire (enfoncement intermédiaire). Il peut être positif ou négatif. Dans le cadre de l'invention, il peut également être nul. Il peut être identique pour toutes les lois d'un même jeu de base, dans ce cas il n'y a qu'un seul paramètre b à calibrer par jeu de loi adaptée. Il peut aussi être multiple, c'est-à-dire être différent selon les changements de rapport de la transmission. Dans ce cas, il est nécessaire de calibrer un vecteur de paramètres b, pour adapter l'ensembles des lois de passage d'un même jeu.

Bien que les trois exemples ci-dessus ne concernent que des changements de rapport montants, l'invention s'applique aussi bien aux changements de rapport montants, qu'aux changements de rapport descendants.

L'invention présente de nombreux avantages. En premier lieu, deux paramètres suffisent à adapter les lois aux conditions de conduite. L'adaptation linéaire assure le calcul de chaque point en temps réel, à partir de la loi de base et du pourcentage d'appui sur la pédale d'accélérateur. L'invention permet de réduire considérablement le temps de mise au point de nouvelles lois. La charge de calcul requise est allégée. Le changement de logique introduit dans le calculateur a un coût très faible. Il s'applique à tout type de recalage requis par l'évolution d'un paramètre donné, dépendant par exemple des conditions de conduite, du rattrapage d'une dispersion d'un composant, du pilotage d'un actuateur, etc.

## Revendications

1. Procédé de paramétrage de lois de changement de rapports sur une transmission à rapports étagés associée à un moteur de traction de véhicule, imposant à la transmission un changement de rapport lorsque son point de fonctionnement, qui est déterminé par la charge du moteur et par la vitesse de déplacement du véhicule, traverse une courbe de vitesse de changement de rapport en fonction de la charge du moteur, des lois de base étant adaptées linéairement à des conditions de roulage particulières, en fonction d'un premier paramètre (a) imposant le changement de rapport à une vitesse de déplacement du véhicule proportionnelle à celle d'une loi de base caractérisé en en ce que en outre les lois de base sont adaptées linéairement à des conditions de roulage particulières en fonction d'un deuxième paramètre (b) imposant à la loi adaptée un écart initial de vitesse de changement de rapport par rapport à la loi de base, aux faibles charges du moteur.

2. Procédé de paramétrage selon la revendication 1, **caractérisé en ce que** la vitesse de changement (y) sur les lois adaptées est paramétrée en fonction de la vitesse de changement (x) sur la loi de base et des paramètres (a) et (b), en appliquant la formule (y = ax + b).

3. Procédé de paramétrage selon la revendication 1 ou 2, **caractérisé en ce que** le paramètre (a) détermine la vitesse de déplacement où les lois de base et les lois adaptées se croisent dans un repère plan.

4. Procédé de paramétrage selon la revendication 3, **caractérisé en ce que** le point de croisement des lois est atteint à la pleine charge du moteur.

5. Procédé de paramétrage selon la revendication 3, **caractérisé en ce que** le point de croisement des lois est atteint à une charge intermédiaire du moteur.

6. Procédé de paramétrage selon la revendication 1 ou 2, **caractérisé en ce que** le paramètre (b) impose un écart de vitesse fixe entre les lois, de la charge moteur nulle jusqu'à une charge moteur intermédiaire.

7. Procédé de paramétrage selon la revendication 1 ou 2, **caractérisé en ce que** le paramètre (b) est nul.

8. Procédé de paramétrage selon l'une des revendications 1 à 7, **caractérisé en ce que** le paramètre (b) est identique pour tous les changements de rapport d'une transmission.

9. Procédé de paramétrage selon l'une des revendication 1 à 7, caractérisé un ce que le paramètre (b) est différent selon les changements de rapport de la transmission.

10. Procédé de paramétrage selon l'une des revendications précédentes, **caractérisé en ce qu'**on adapte sélectivement certaines lois d'un même jeu.

11. Procédé de paramétrage selon l'une des revendications précédentes, **caractérisé en ce qu'**il s'applique aux changements de rapport montants et aux changements de rapport descendants.

## Patentansprüche

1. Verfahren zum Parametrieren von Gangwechselregeln für ein Stufengetriebe, das einem Fahrzeugfahrmotor zugeordnet ist, wobei dem Getriebe ein Gangwechsel aufgezwungen wird, wenn sein Betriebspunkt, der durch die Motorlast und die Fahrgeschwindigkeit des Fahrzeugs bestimmt wird, eine Kurve der Gangwechselgeschwindigkeit abhängig von der Motorlast übersteigt, wobei die Grundregeln an besondere Fahrbedingungen linear angepasst werden, abhängig von einem ersten Parameter (a), der den Gangwechsel bei einer Fahrgeschwindigkeit des Fahrzeugs aufzwingt, die proportional zu derjenigen einer Grundregel ist,
**dadurch gekennzeichnet, dass** ferner die Grundregeln abhängig von einem zweiten Parameter (b), der der angepassten Regel bei geringer Motorlast ein anfänglicher Unterschied in der Gangwechselgeschwindigkeit relativ zu der Grundregel aufzwingt, an besondere Fahrbedingungen linear angepasst werden.

2. Parametrierungsverfahren nach Anspruch 1,
**dadurch gekennzeichnet, dass** die Wechselgeschwindigkeit (y) an den angepassten Regeln abhängig von der Wechselgeschwindigkeit (x) an der Grundregel und den Parametern (a) und (b) bei Anwenden der Formel (y = ax + b) parametriert wird.

3. Parametrierungsverfahren nach Anspruch 1 oder 2,
**dadurch gekennzeichnet, dass** der Parameter (a) die Fahrgeschwindigkeit bestimmt, bei der die Grundregeln und die angepassten Regeln sich in einem ebenen Bezugssystem schneiden.

4. Parametrierungsverfahren nach Anspruch 3,
**dadurch gekennzeichnet, dass** der Kreuzpunkt der Regeln bei der vollen Motorlast erreicht wird.

5. Parametrierungsverfahren nach Anspruch 3,
**dadurch gekennzeichnet, dass** der Kreuzpunkt der Regeln bei einer mittleren Motorlast erreicht wird.

6. Parametrierungsverfahren nach Anspruch 1 oder 2,
**dadurch gekennzeichnet, dass** der Parameter (b) einen festen Geschwindigkeitsunterschied zwischen den Regeln aufzwingt, von der Motorlast gleich Null bis zu einer mittleren Motorlast.

7. Parametrierungsverfahren nach Anspruch 1 oder 2,
**dadurch gekennzeichnet, dass** der Parameter (b) null ist.

8. Parametrierungsverfahren nach einem der Ansprüche 1 bis 7,
**dadurch gekennzeichnet, dass** der Parameter (b) für die sämtlichen Gangwechsel eines Getriebes identisch ist.

9. Parametrierungsverfahren nach einem der Ansprüche 1 bis 7,
**dadurch gekennzeichnet, dass** der Parameter (b) gemäß den Gangwechseln des Getriebes unterschiedlich ist.

10. Parametrierungsverfahren nach einem der vorstehenden Ansprüche, **dadurch gekennzeichnet, dass** gewisse Regeln eines gleichen Satzes selektiv angepasst werden.

11. Parametrierungsverfahren nach einem der vorstehenden Ansprüche, **dadurch gekennzeichnet, dass** es für Hoch- und Rückschaltgangwechsel zutrifft.

## Claims

1. A method of parameterization of gearshift laws for a stepped-ratio transmission associated with a vehicle traction engine, imposing a change of ratio on the transmission when its operating point, which is determined by engine load and vehicle travel speed, crosses a gearshift speed curve as a function of engine load, basic laws being linearly adapted to particular driving conditions, as a function of a first parameter (a) imposing the gear change at a vehicle travel speed proportional to that of a basic law, **characterized in that** the basic laws are furthermore linearly adapted to particular driving conditions as a function of a second parameter (b) imposing on the adapted law an initial gear change speed deviation from the basic law, at low engine loads.

2. The parameterization method according to claim 1, **characterized in that** the rate of change (y) on the adapted laws is parameterized as a function of the rate of change (x) on the basic law and the parameters (a) and (b), by applying the formula (y = ax + b).

3. The parameterization method according to claim 1 or 2,
**characterized in that** parameter (a) determines the travel speed where the basic laws and adapted laws intersect in a planar frame of reference.

4. The parameterization method according to claim 3, **characterized in that** the crossover point of the laws is reached at full engine load.

5. The parameterization method according to claim 3, **characterized in that** the crossover point of the laws is reached at an intermediate engine load.

6. The parameterization method according to claim 1 or 2,
**characterized in that** parameter (b) imposes a fixed speed difference between the laws, from zero engine load to an intermediate engine load.

7. The parameterization method according to claim 1 or 2,
**characterized in that** parameter (b) is zero.

8. The parameterization method according to one of claims 1 to 7, **characterized in that** parameter (b) is identical for all gear changes of a transmission.

9. The parameterization method according to one of claims 1 to 7, **characterized in that** parameter (b) is different according to transmission ratio changes.

10. The parameterization method according to one of the preceding claims, **characterized in that** certain laws of the same set are selectively adapted.

11. The parameterization method according to one of the preceding claims, **characterized in that** it applies to both upshifts and downshifts.
